# EUROPEAN PATENT APPLICATION

(11) **EP 2 667 062 A1**
(43) Date of publication of application: **27.11.2013**
(21) Application number: 12736233.3
(22) Date of filing: 12.01.2012
(51) Int. Cl.: F16J 15/32

(54) **SEAL DEVICE**

(30) Priority: 21.01.2011 JP 2011011104
(71) Applicant: Wartsila Japan Ltd., Hyogo 650-0045 (JP)
(72) Inventor: HIMENO Nobuhiro, Toyama-shi Toyama 930-0916 (JP); KYOGOKU Mashiba, Toyama-shi Toyama 930-0916 (JP); TAMURA Masakazu, Toyama-shi Toyama 930-0916 (JP)
(74) Representative: Isarpatent
(86) International application number: PCT/JP2012/050500
(87) International publication number: WO 2012/098989

(57) **Abstract**

A sealing device includes: a sealing ring (1) slidably in hermetic contact with a surface of a shaft (A); a hollow partition wall (2) in contact with the sealing ring (1); and a housing (B) holding the sealing ring (1) and supporting the hollow partition wall (2). The sealing ring (1) is formed of an elastic material, and includes a lip part (1 a) in sliding contact with the entire periphery of the surface of the shaft (A), an elastic arm part (1 b) supporting the lip part (1a) at a sliding contact position, and a key part (1c) connecting the elastic arm part (1b) and the housing (B). The straining force on the shaft (A) is adjusted by expansion and contraction of the hollow partition wall (2).

## Description

### Technical Field

The present invention relates to a sealing device including at least one sealing ring provided in sliding contact with a shaft for securing the state in which the flow of a fluid is blocked.

### Background Art

A sealing device is provided for preventing the inconvenience in functions due to the entry of a fluid into a device of a hull or the like through a space between a bearing and a rotating shaft in a stern tube of a ship or the like, and has a single sealing ring or multiple sealing rings including an elastic body such as rubber or elastomer.

A sealing ring is slidably in hermetic contact with (hereinafter referred to as seals) a surface of a shaft and maintains the straining force on the shaft with the elastic force of the sealing ring itself, a spring or the like, a fluid pressure difference on front and back faces of the sealing ring, and the like. The methods of allowing the sealing ring to apply the straining force to the shaft include: first, a method of using the elastic deformation of a lip part (for example, see Patent Document 1 below); second, a method of adjusting the value of an interference by an air spring type sealing (see, for example, Patent Document 2 below); and third, a method of using a straining force applying means with a tube shape attached to the seal lip (sealing ring) (see, for example, Patent Document 3 below).

### Citation List

### Patent Documents

Patent Document 1: Japanese Examined Utility Model Application Publication No. S50-15356
Patent Document 2: Japanese Unexamined Utility Model Application Publication No. H5-36166
Patent Document 3: Japanese Unexamined Utility Model Application Publication No. H2-76267

### Summary of Invention

### Technical Problem

However, for example, in the first method, the configuration is large-scaled and it is difficult to adjust the straining force. In the second method, a problem occurs in that the entire components including a fluid chamber need to be replaced when the lip part has been consumed, and moreover another problem occurs in that the straining force is affected by the ambient temperature environment. In the third method, a problem occurs in that it is difficult to adjust the straining force correctly because the elasticity or the diameter of the tube is unstable against the change of the fluid pressure no matter how the fluid pressure in the tube is changed.

In addition to these, in any of the above methods, the deterioration in function of an actuator part due to the deterioration of the elastic body or the like progresses along with the decrease in elastic force of the sealing ring itself or the abrasion of a slidable unit after a long use, so that the contact state for securing the straining force cannot be maintained from both the material point of view and the mechanical point of view.

The present invention has been made in view of the above circumstances, and has an object to provide a sealing device with a convenient configuration in maintenance, in which the lifetime of the sealing ring is extended and the contact degree can be actively adjusted as appropriate according to the surrounding environment or the abrasion degree of the sealing ring.

### Solution to Problem

A sealing device according to the present invention made for solving the above problem includes a sealing ring slidably in hermetic contact with a surface of a shaft, a hollow partition wall in contact with the sealing ring, and a housing holding the sealing ring and supporting the hollow partition wall.

The sealing ring is formed of an elastic material, and includes a lip part in sliding contact with the entire periphery of the surface of the shaft, an elastic arm part supporting the lip part at a sliding contact position, and a key part connecting the elastic arm part and the housing. The straining force against the shaft is adjusted by expansion and contraction of the hollow partition wall. Note that the sealing ring and the hollow partition wall may be formed in a ring shape using a single member or formed using the combination of a plurality of members obtained by dividing a ring shape in a circumferential direction. The elastic arm part refers to a frill-like object that, when the object is bent in a direction approximately perpendicular to a projection direction thereof, can swing a part thereof in a bent direction, like a so-called flat spring.

The hollow partition wall can surely press the lip part of the sealing ring against the shaft by applying pressure to the inside of the hollow partition wall with the hollow partition wall provided in contact with an outer surface of the lip part or the elastic arm part. On the contrary, when the hollow partition wall is provided in contact with an inner surface of the elastic arm, the lip part of the sealing ring can be surely lifted up from the shaft by applying pressure to the inside of the hollow partition wall. Further, when the hollow partition wall is provided for each of the outer and inner surfaces, both the pressing and lifting up of the lip part of the sealing ring with respect to the shaft are performed by applying pressure to the inside of the hollow partition wall, and thus, the contact mode between the lip part and the shaft can be adjusted.

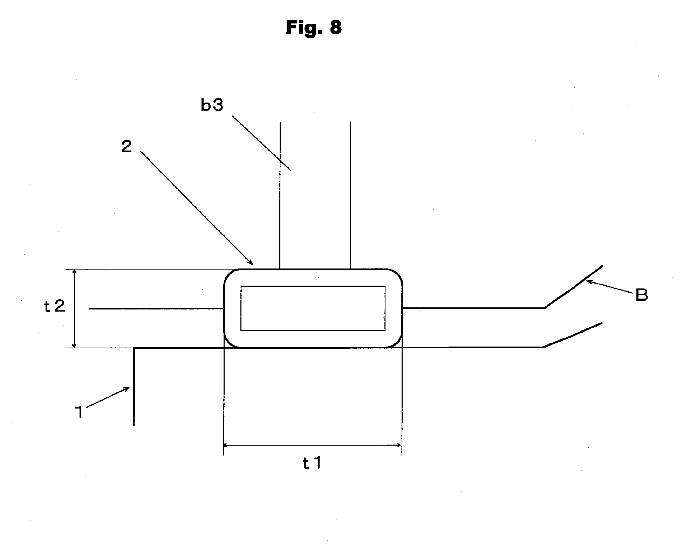

The hollow partition wall may be held (attached to, incorporated into, etc.) by the housing in a state of being in contact with the sealing ring, or may be integrated (integrally formed, attached or the like) with the sealing ring in a state of being supported by the inner surface of the housing. The state is not limited as long as the lip part of the sealing ring can be completely pressed against the shaft, and preferably, as compared with the width of the both end faces (t1 in Fig. 8 (end face width)) of a ring-shaped tube with a rectangular vertical section facing a radial direction (hereinafter referred to inward and outward), the distance between inward and outward end faces (t2 in Fig. 8) is set sufficiently small.

### Advantageous Effects of Invention

A sealing device according to the present invention includes a sealing ring slidably in hermetic contact with a surface of a shaft, a hollow partition wall in contact with the sealing ring, and a housing holding the sealing ring and supporting the hollow partition wall. By changing the pressure application state of a fluid flowing inside the hollow partition wall, the hollow partition wall expands or contracts to change the lip part of the sealing ring inward or outward, thereby adjusting the straining force. As a result, the contact degree can be actively adjusted as appropriate according to the environment or the abrasion degree of the sealing ring, and moreover, the outflow of the sealed fluid or the entry of the outside fluid due to the pressure change can be prevented.

By being provided in contact with the outer surface or the inner surface of the elastic arm part, the hollow partition wall can adjust the contact mode between the lip part and the shaft in a manner that, for example, the lip part of the sealing ring is pressed against the shaft or the lip part of the sealing ring can be lifted up from the shaft. The hollow partition wall can increase the efficiency of changing the inner and outer dimensions thereof relative to the change in pressure by using a ring-shaped tube with a rectangular vertical section as the hollow partition wall and by setting the distance between the inward and outward end faces to be smaller than the width of the inward and outward end faces because the expansion due to the pressure application is promoted strongly in the inward and outward directions.

As thus described, since the sealing device according to the present invention has a simple configuration and a function thereof is not affected by the environment, the straining force can be adjusted easily and surely. Moreover, the consumption of the hollow partition wall requires simply the replacement of only the hollow partition wall (part) serving as an actuator; therefore, a sealing device which is convenient in terms of maintenance can be provided in which, even though the elastic force of the sealing ring itself after the long use has deteriorated or the slidable unit thereof has abrased, the replacement of the hollow partition wall can be the solution and enables the long-term use while minimizing the function deterioration.

### Brief Description of Drawings

Fig. 1 is a vertical sectional view depicting an embodiment of a sealing device according to the present invention.
Figs. 2 are vertical sectional views of a main part of a sealing device according to the present invention, Fig. 2A depicting a first embodiment and Fig. 2B depicting a second embodiment.
Fig. 3 is a vertical sectional view of a main part, depicting a third embodiment of the sealing device according to the present invention.
Fig. 4 is a vertical sectional view of a main part, depicting a fourth embodiment of the sealing device according to the present invention.
Figs. 5 are vertical sectional views of a main part of the sealing device according to the present invention, Fig. 5A depicting a fifth embodiment and Fig. 5B depicting a sixth embodiment.
Fig. 6 is a vertical sectional view of a main part, depicting a seventh embodiment of the sealing device according to the present invention.
Fig. 7 is a vertical sectional view of a main part, depicting another embodiment of the sealing device according to the present invention.
Fig. 8 is a vertical sectional view of a main part, depicting an installation example of a hollow partition wall used in the sealing device according to the present invention.

### Description of Embodiments

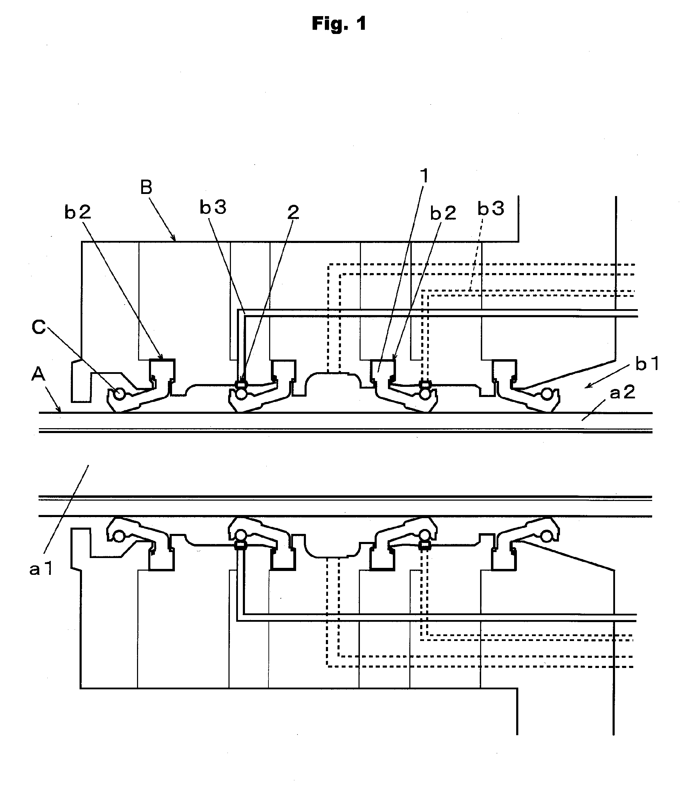

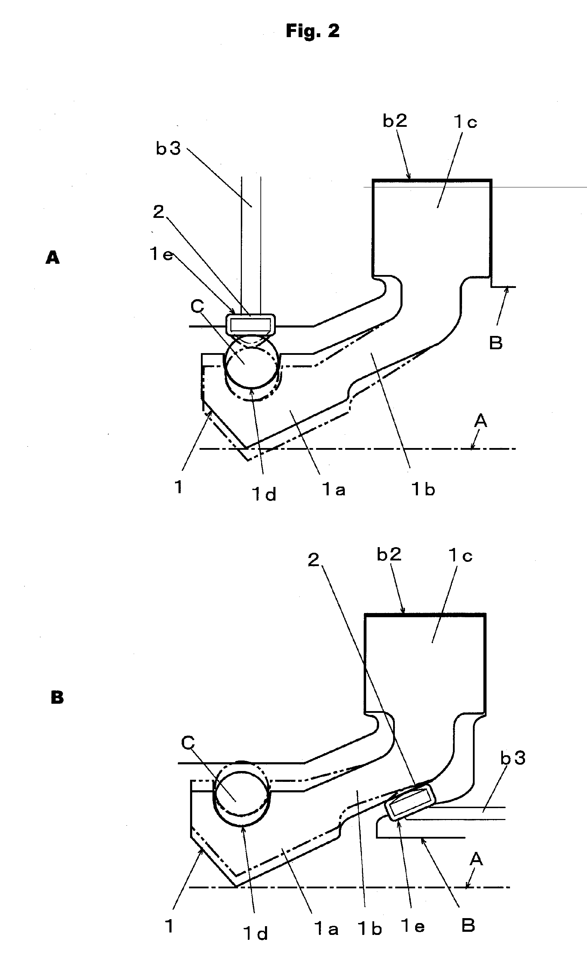

An embodiment of a sealing device according to the present invention is hereinafter described with reference to the drawings. Fig. 1 depicts an example of a stern tube sealing device. The stern tube sealing device includes: a sealing ring 1 slidably in hermetic contact with a surface of a liner (shaft A) a2 covering a propeller shaft a1; a hollow partition wall 2 in contact with the sealing ring 1; and a housing B holding the sealing ring 1 and supporting the hollow partition wall 2 (see Figs. 2 to Fig. 6).

The sealing ring 1 is a body of axial symmetry formed by rotating a shape by 360° around the shaft A, the shape integrally forming: a lip part 1 a in sliding contact with the entire periphery of the surface of the shaft A; an elastic arm part 1b supporting the lip part 1 a at a sliding contact position; and a key part 1 c connecting the elastic arm part 1 b and the housing B.

The lip part 1a has a shape including a tapering inner surface as a part to be in contact with the shaft A. The elastic arm part 1 b extends outward in any direction of the longitudinal directions (hereinafter called front and back) of the shaft A from an end face of the lip part 1a, and forms an arc, a curve shape obtained by rotating a letter V by approximately 90° clockwise, or a straight shape toward the key part 1 c located at the outermost side of the sealing ring 1. Note that the elastic arm part 1 b may employ a configuration in which, as necessary, the elastic arm part 1b extends outward in any of the front and back directions from the side face of the lip part 1a in an approximately linear manner toward the key part 1 c located at the outermost side of the sealing ring 1.

The hollow partition wall 2 is a ring-shaped tube with a rectangular vertical section. The hollow partition wall 2 includes an elastic material with hermetical properties, such as rubber or elastomer. One hollow partition wall 2 or a plurality of hollow partition walls 2 is each fixed inside the housing B so that the pressure can be directly or indirectly applied to the sealing ring 1.

The expansion and contraction of the hollow partition wall 2 change the curvature of the arc formed by the elastic arm part 1b, the bending angle of the letter V formed by the elastic arm part 1b, and the expansion and the contraction of the linear shape, thereby deforming the elastic arm part 1b. This results in the inward or outward change of the lip part 1a supported by the elastic arm part 1b, so that the straining force of the lip part 1a on the shaft A is adjusted.

In particular, the hollow partition wall 2 in this example is relatively large in width t1 (end-face width) of the both end faces facing inward and outward and relatively narrow in distance t2 between the inward and outward end faces (the thickness in the inward and outward directions is set small) (see Fig. 8), so that the expansion by pressure application is strongly promoted in the inward and outward directions to increase the efficiency of the change in inner and outer dimensions relative to the pressure change. The change can be more extreme if the thickness of the inward and outward end faces of the tube included in the hollow partition wall 2 is set smaller than the thickness of the front, back, right, and left side faces. The presence of the hollow partition wall 2 has an effect of suppressing or controlling the fatigue of the elastic arm part 1b due to aging.

The housing B includes a shaft hole b1 through which the shaft A is inserted, and the peripheral surface of the shaft A inserted through the shaft hole b1 is supported to form uniform space at each position on the inner surface of the shaft hole b1. The space is necessary to be sufficient for incorporation of a predetermined number of sealing rings 1 and the securing the inward and outward movable range of the changeable lip part 1a in the sealing ring 1.

In embodiments depicted in Figs. 2 to Fig. 6, the key part 1c is incorporate into a depressed part (depressed groove or the like) b2 of the housing B, and the lip part 1a is interposed between the housing B and the shaft A in a manner that the outer surface of the lip part 1 a faces the inner surface of the housing B and the inner surface of the lip part 1 a faces the shaft A.

In the first embodiment depicted in Fig. 2A, the hollow partition wall 2 is held between the outer surface of the lip part 1 a and the inner surface of the housing B, so that the internal pressure of the hollow partition wall 2 is adjusted via a fluid circuit b3 provided in the housing B. According to this embodiment, the lip part 1a of the sealing ring 1 can be surely pressed against the shaft A by applying pressure to the inside of the hollow partition wall 2.

This example employs a configuration in which a spring ring C is attached to a strained groove 1d peripherally provided for the outer surface of the lip part 1a of the sealing ring 1 and the hollow partition wall 2 pressing the outer surface of the spring ring C is incorporated into a ring groove 1e peripherally in contact with the inner surface of the housing B. By the provision of the straining force applying means like the spring ring C, the straining force can be adjusted in view of the pressure application from the hollow partition wall 2 and the elasticity of the elastic arm part 1 b. Note that the straining force applying means may be other than the spring ring C; for example, a spring with a shape obtained by connecting a plurality of spring rings in a spiral manner may be used.

In the second embodiment depicted in Fig. 2B, not just the key part 1c of the sealing ring 1 is incorporated into the depressed part b2 of the housing B but also the elastic arm part 1 b is covered such that the inner surface of the depressed part b2 close to the opening is separated from the elastic arm part 1 b. Thus, the hollow partition wall 2 is sandwiched by the inner surface of the elastic arm part 1 b and the inner surface of the depressed part b2 close to the opening, so that the internal pressure of the hollow partition wall 2 can be adjusted via the fluid circuit b3 provided inside the housing B.

According to this embodiment, the pressure application to the inside of the hollow partition wall 2 leads to the direct pressure application to the inside of the elastic arm part 1 b of the sealing ring 1, so that the lip part 1 a can be lifted up from the shaft A for sure. In this example, the hollow partition wall 2 pressing the inner surface of the elastic arm part 1 b is incorporated in the ring groove 1 e peripherally in contact with the inner surface of the depressed part b2; however, for example, the hollow partition wall 2 may be integrally attached to the inner surface of the elastic arm part 1 b of the sealing ring 1. In this example, also, the spring ring C is attached to the strained groove 1d peripherally provided for the outer surface of the lip part 1 a of the sealing ring 1.

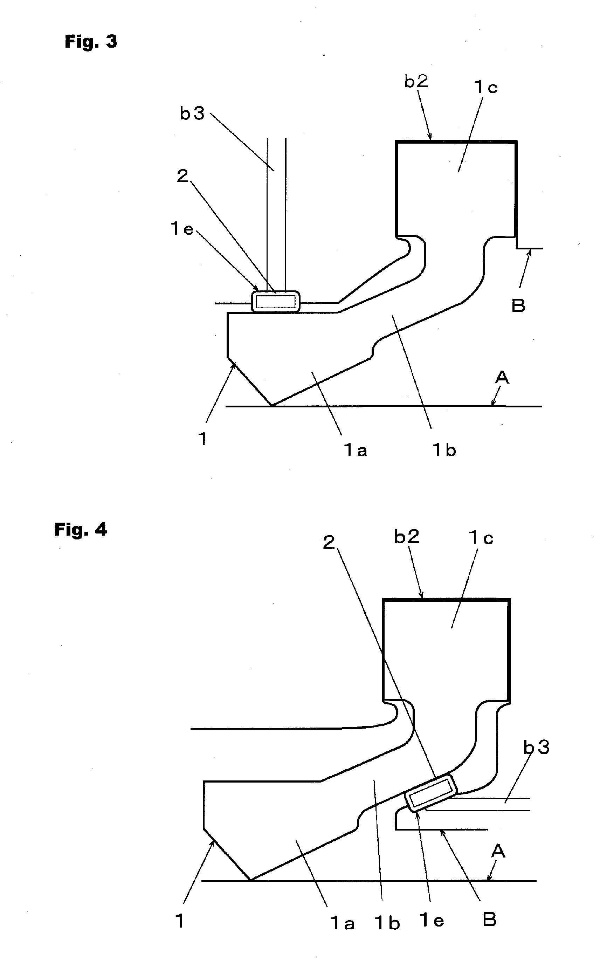

An example in which the spring ring C is not attached to the outer surface of the lip part 1a of the sealing ring 1 in the first embodiment and the second embodiment corresponds to the third embodiment and the fourth embodiment depicted in Fig. 3 and Fig. 4. In the third embodiment, the hollow partition wall 2 for directly pressing the outer surface of the lip part 1a of the sealing ring 1 is incorporated into the ring groove 1e peripherally provided for the inner surface of the housing B.

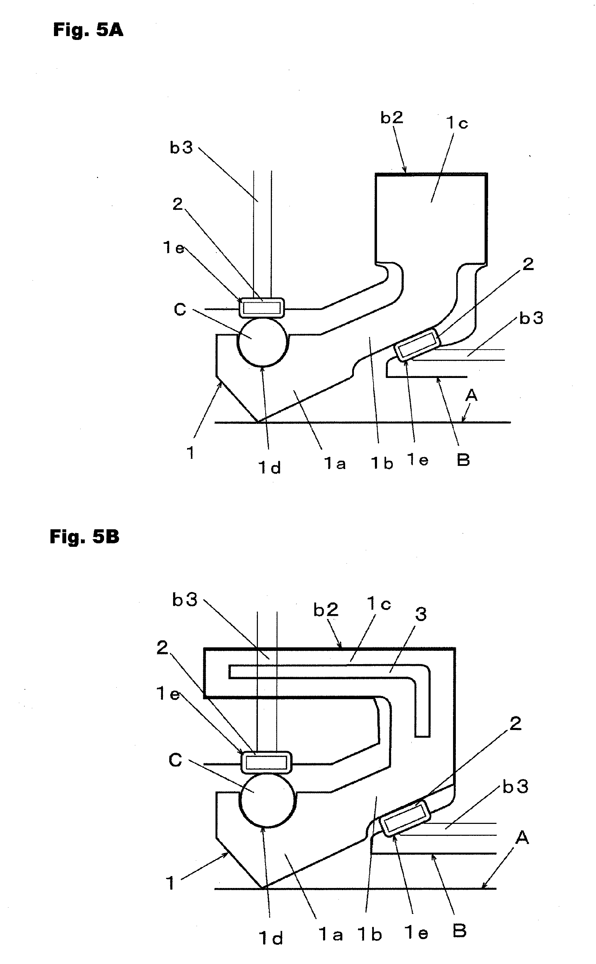

In the fifth embodiment depicted in Fig. 5A, not just the key part 1c of the sealing ring 1 is incorporated in the depressed part b2 of the housing B but also the elastic arm part 1b is covered such that the inner surface of the depressed part b2 close to the opening is separated from the elastic arm part 1 b. The hollow partition walls 2 are each sandwiched between the outer surface of the lip part 1a and the inner surface of the housing B and between the inner surface of the depressed part b2 close to the opening and the inner surface of the elastic arm part 1b, and adjust the internal pressure of the both hollow partition walls 2 and 2 via the fluid circuit b3 provided inside the housing B.

According to this embodiment, the pressure application to the inside of the hollow partition wall 2 held by the outer surface of the lip part 1 a can surely press the lip part 1a of the sealing ring 1 against the shaft A, and moreover the pressure application to the inside of the hollow partition wall 2 held by the inner surface of the elastic arm part 1b can surely lift up the lip part 1 a of the sealing ring 1 from the shaft A. Thus, the contact mode such as the angle between the contact surface of the lip part 1 a and the surface of the shaft A can be adjusted.

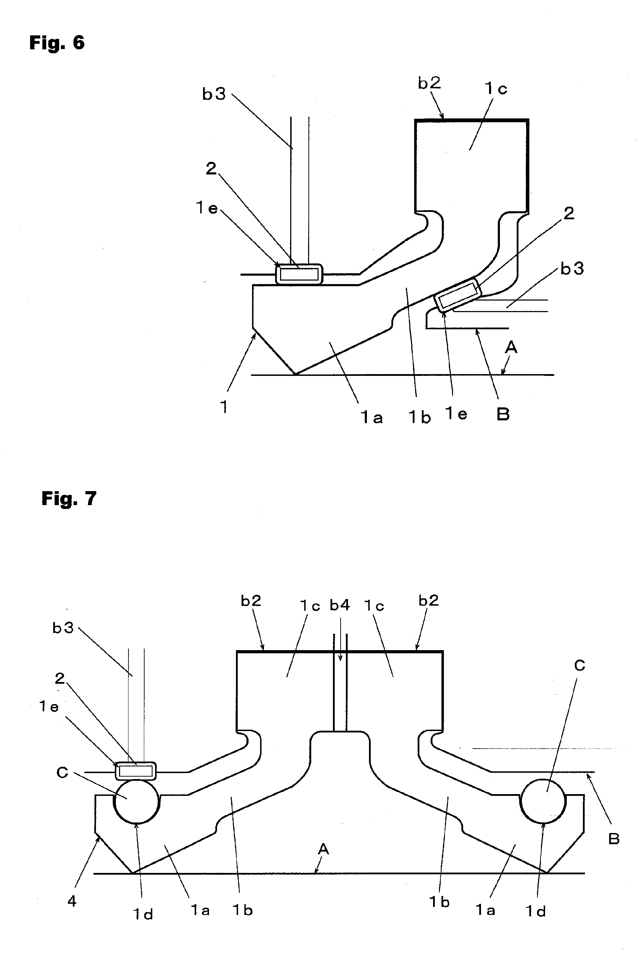

In this example, the spring ring C is attached to the strained groove 1d peripherally provided for the outer surface of the lip part 1 a of the sealing ring 1, and the hollow partition wall 2 pressing the outer surface of the spring ring C is incorporated into the ring groove 1e peripherally in contact with the inner surface of the housing B; however, for example, the hollow partition wall 2 directly pressing the outer surface of the lip part 1a of the sealing ring 1 may be incorporated into the ring groove 1e peripherally in contact with the inner wall of the housing B as shown in the seventh embodiment of Fig. 6.

In the sixth embodiment depicted in Fig. 5B, a frame 3 for shape keeping and reinforcing is internally provided as the shape of the key part 1c of the sealing ring 1 in addition to employing a hook shape.

Moreover, as depicted in Fig. 7, for example, one sealing ring may be provided with a pair of lip parts 1a and a sealing ring 4 having a leak path b4 for feeding or discharging a fluid flowing through a space existing between the shaft A and the sealing ring at the connection part of the pair of lip parts 1a may be incorporated in the housing B in each embodiment, and the hollow partition wall 2 may be incorporated as appropriate in a mode shown in each embodiment. In this example, the two sealing rings are integrally connected to achieve this in the first, second, and fifth embodiments, and the like.

### Reference Signs List

- A: shaft
- a1: propeller shaft
- a2: liner
- B: housing
- b1: shaft hole
- b2: depressed part
- b3: fluid circuit
- b4: leak path
- C: spring ring
- t1: end-face width
- t2: distance between end faces
- 1: sealing ring
- 1a: lip part
- 1b: elastic arm part
- 1c: key part
- 1d: strained groove
- 1e: ring groove
- 2: hollow partition wall
- 3: frame
- 4: sealing ring

## Claims

1. A sealing device comprising:
a sealing ring slidably in hermetic contact with a surface of a shaft;
a hollow partition wall in contact with the sealing ring; and
a housing holding the sealing ring and supporting the hollow partition wall, wherein:
the sealing ring is formed of an elastic material and includes a lip part in sliding contact with an entire periphery of the surface of the shaft, an elastic arm part supporting the lip part at a sliding contact position, and a key part connecting the elastic arm part and the housing; and
a straining force on the shaft is adjusted by expansion and contraction of the hollow partition wall.

2. The sealing device according to Claim 1, wherein the hollow partition wall is provided in contact with an outer surface or an inner surface of the lip part or the elastic arm part.

3. The sealing device according to Claim 1 or 2, wherein:
the hollow partition wall is a ring-shaped tube with a rectangular vertical section; and
a distance between inward and outward end faces is smaller than a width of the inward and outward end faces.
